# EUROPEAN PATENT APPLICATION

(11) **EP 3 150 739 A1**
(43) Date of publication of application: **05.04.2017**
(21) Application number: 14893145.4
(22) Date of filing: 29.05.2014
(51) Int. Cl.: C23C 2/12, C22C 21/00, C22C 21/02

(54) **MOLTEN Al-PLATED STEEL PLATE OF EXCEPTIONAL WORKABILITY**

(30) Priority: 26.05.2014 JP 2014108438
(71) Applicant: Nisshin Steel Co., Ltd., Chiyoda-ku Tokyo 100-8366 (JP)
(72) Inventor: FURUKAWA Shinya, Sakai-shi Osaka 592-8332 (JP); OKAMOTO Junichi, Sakai-shi Osaka 592-8332 (JP); HATTORI Yasunori, Sakai-shi Osaka 592-8332 (JP)
(74) Representative: Carstens, Dirk Wilhelm
(86) International application number: PCT/JP2014/064348
(87) International publication number: WO 2015/181936

(57) **Abstract**

[Problem]

The invention is intended to improve the galling resistance of the hot-dip Al-based alloy coated layer of a hot-dip Al-based alloy coated steel sheet.

[Solution]

Provided is a hot-dip Al-based alloy coated steel sheet excellent in workability that comprises a hot-dip Al-based alloy coated layer of a composition containing 1.0 to 12.0 mass% of silicon and 0.002 to 0.080 mass% of boron and formed on a surface of a substrate steel sheet, the coated layer having an I_{MAX}/I₀ ratio of 2.0 or more as measured by GDS (glow discharge optical emission spectrometry) analysis from the outermost surface into the depth of the coated layer, where I_{MAX} is the maximum detection intensity of boron in regions with a sputter depth of 0 to 1.0 µm, and I₀ is the average detection intensity of boron within a sputter depth of 1.0 to 5.0 µm.

## Description

### Technical Field

The present invention relates to a hot-dip Al-based alloy coated steel sheet excellent in workability in which boron is contained in the coated layer to improve its resistance to galling that occurs in the coated layer as it slides against a mold during working.

### Background Art

Hot-dip Al-based alloy coated steel sheets are in wide use, particularly in applications requiring heat resistance such as in the exhaust gas members of automobiles and the combustion devices members. Silicon is added to a hot-dip Al-based alloy coating bath, as required. Adding silicon to the bath suppresses the growth of the brittle Al-Fe-based alloy layer that generates between base steel (coating substrate) and a hot-dip Al-based alloy coated layer, and is effective at improving properties such as bending workability. In other cases, elements such as Ti, B, Sr, Cr, Mg, and Zr are also added to an Al coating bath. The composition of the hot-dip Al-based alloy coated layer basically reflects the contents of silicon and other additional elements in the bath.

### Citation List

### Patent Literature

Patent Literature 1: JP-A-2013-166977
Patent Literature 2: JP-A-2013-166978
Patent Literature 3: WO2009/017245
Patent Literature 4: JP-A-2002-30457

### Summary of Invention

### Technical Problem

An advantage of the hot-dip Al-based alloy coated steel sheet is the higher heat resistance than that of hot-dip zinc-based alloy coated steel sheets. However, the hot-dip Al-based alloy coated steel sheet has a potential problem that galling due to the sliding against a mold is generally more likely to occur than in hot-dip zinc-based alloy coated steel sheets during processing by mold. The galling of the coated steel sheet is a phenomenon in which severe wear marks occur in the coated layer as the coated layer metal adheres to the mold and prevents smooth sliding against the mold.

Patent Literatures 1 and 2 describe hot-dip Al coating compositions with a B content of 0.06 mass% (No.29 in Table 2, respectively). However, in the techniques disclosed in these publications, a hot-dip Al-based alloy coated layer is subjected to a heat treatment (or a post-heat treatment as it is often called) after hot-dip Al-based alloy coating to modify the texture of the coated layer structure, before anodizing the coated layer. These publications do not describe that a coated layer, which is obtained after being dipped in a hot-dip Al-based alloy coating bath containing a predetermined amount of boron, is subjected to processing and sliding by mold.

Patent Literature 3 describes hot-dip Al coating compositions with B contents of 0. 12 mass% and 0.10 mass% (Nos. 8 and 17 in Table 2). However, studies conducted by the present inventors revealed that containing such large amounts of boron in the coated layer lowers the corrosion resistance (white rust resistance) of the coated layer. Patent Literature 3 does not describe improving galling resistance.

Patent Literature 4 describes an aluminum-based alloy coated steel sheet that excels in galling resistance and white rust resistance. However, the technique disclosed in this publication is intended to improve galling resistance and other such properties by a chemical process in which a granulated substance of primarily aluminum fluoride is dispersed over a surface.

It is an object of the present invention to improve the galling resistance of the hot-dip Al-based alloy coated layer itself (hereinafter, simply "coating galling resistance") of a hot-dip Al-based alloy coated steel sheet, and to desirably maintain the bending workability and the press workability of the sheet, and the corrosion resistance (white rust resistance) of the coated layer.

### Solution to Problem

The present inventors conducted intensive studies, and found that boron is enriched at the surface portion of an Al-based alloy coated layer of a hot-dip Al-based alloy coated steel sheet obtained with a hot-dip Al-based alloy coating bath containing an appropriate amount of boron. It was also found that such a hot-dip Al-based alloy coated layer containing enriched boron at the surface portion was desirably slidable against a mold, and galling can be suppressed significantly. The present invention was completed on the basis of these findings.

The foregoing object of the present invention can be achieved with a hot-dip Al-based alloy coated steel sheet excellent in workability that comprises a hot-dip Al-based alloy coated layer of a composition containing 1.0 to 12.0 mass% of silicon and 0.002 to 0.080 mass% of boron and formed on a surface of a substrate steel sheet, the coated layer having an I_{MAX}/I₀ ratio of 2.0 or more as measured in depth analysis by GDS (glow discharge optical emission spectrometry) from the outermost surface into the depth of the coated layer, where I_{MAX} is the maximum detection intensity of boron in regions with a sputter depth of 0 to 1.0 µm, and I₀ is the average detection intensity of boron within a sputter depth of 1.0 to 5.0 µm. The hot-dip Al-based alloy coated steel sheet can have particularly high bending workability when the Si content in the coated layer is adjusted to 1.0 mass% or more and less than 3.0 mass%. The average thickness of the hot-dip Al-based alloy coated layer (excluding the Al-Fe-based alloy layer) is, for example, 10 to 150 µm.

The sputter depth can be determined as follows. The surface of a hot-dip Al-based alloy coated steel sheet is sputtered under GDS measurement conditions, and the irregularity profile of the sample surface, including the sputtered portion, is measured to determine a GDS sputtering rate. The sputtering time based on this sputtering rate can then be converted into a sputter depth.

The specific composition of the hot-dip Al-based alloy coated layer may be, for example, 1.0 to 12.0 mass%, preferably 1.0 mass% or more to less than 3.0 mass% of silicon, 0.002 to 0.080 mass% of boron, 0.1 to 3.0 mass% of iron, 0 to 0.2 mass% of strontium, 0 to 0.1 mass% of sodium, 0 to 0.1 mass% of calcium, 0 to 0.6 mass% of antimony, 0 to 0.2 mass% of phosphorus, 0 to 5.0 mass% of magnesium, 0 to 1.0 mass% of chromium, 0 to 2.0 mass% of manganese, 0 to 0.5 mass% of titanium, 0 to 0.5 mass% of zirconium, 0 to 0.5 mass% of vanadium, with a balance of Al and unavoidable impurities. Sr, Na, Ca, Sb, P, Mg, Cr, Mn, Ti, Zr, and V are optional elements. Iron comes to be mixed in a coating bath from the members of equipment for holding the coating bath, or from the steel sheet dipped in the coating bath.

It is preferable that the average thickness of an Al-Fe-based alloy layer interposed between the base steel of the substrate steel sheet and the hot-dip Al-based alloy coated layer be 8.0 µm or less.

The hot-dip Al-based alloy coated steel sheet described above is preferred for use as a hot-dip Al-based alloy coated steel sheet for processing with a process that includes sliding the coated layer against a mold. Examples of such process include press working that involves cupping or bulging, draw-bead working, and roll forming.

### Advantageous Effects of Invention

The present invention has made it possible to improve the problematic galling resistance issue of hot-dip Al-based alloy coated steel sheets commonly seen in processes that use a mold. With the improved galling resistance of the hot-dip Al-based alloy coated layer itself, a hot-dip Al-based alloy coated steel sheet having excellent galling resistance can be provided without relying on a chemical process that is optionally performed after the coating. The present invention also makes it possible to desirably maintain bending workability, and the corrosion resistance of the coated layer.

### Brief Description of Drawings

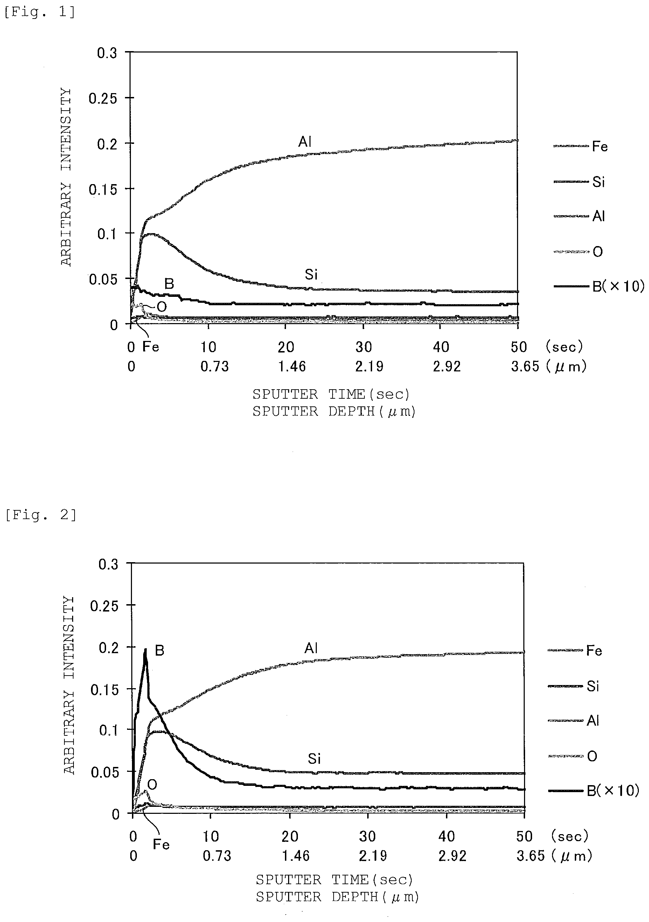

[FIG. 1] FIG. 1 represents an elemental concentration profile of the coated layer of a hot-dip Al-based alloy coated steel plate produced with an Al-9.2 mass% Si coating bath containing 0.001 mass% of boron, as measured by GDS analysis from the outermost surface into the depth of the coated layer (Comparative Example).
[FIG. 2] FIG. 2 represents an elemental concentration profile of the coated layer of a hot-dip Al-based alloy coated steel plate produced with an Al-9.2 mass% Si coating bath containing 0.03 mass% of boron, as measured by GDS analysis from the outermost surface into the depth of the coated layer (Example of the present invention).

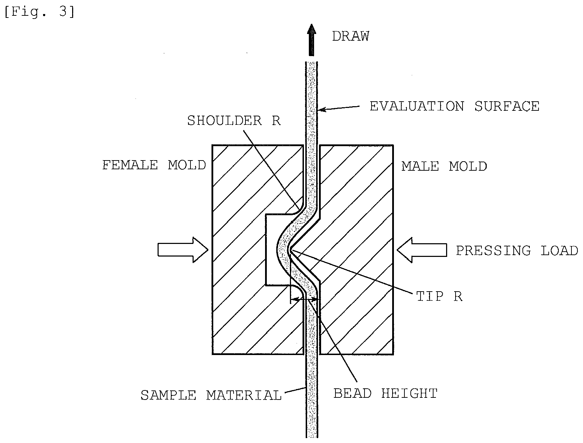

[FIG. 3] FIG. 3 is a diagram schematically representing the positional relationship between molds and a test material (coated steel sheet) in a draw-bead test.

### Description of Embodiments

### Boron Distribution in Coated Layer

FIG. 1 represents an elemental concentration profile of the coated layer of a hot-dip Al-based alloy coated steel sheet produced with an Al-9. 2 mass% Si coating bath containing 0.001 mass% of boron, as measured by GDS analysis from the outermost surface into the depth of the coated layer. The measured boron intensity was shown in 10 times the scale used for the other elements (the same for FIG. 2). The boron concentration distribution does not show large fluctuations, though a slight increase was observed in depths close to the outermost surface. The hot-dip Al-based alloy coated steel sheet does not show notable improvements in galling resistance compared to common hot-dip Al-based alloy coated steel sheets obtained by using a hot-dip Al-based alloy coating bath that does not contain boron.

FIG. 2 represents an elemental concentration profile of the coated layer of a hot-dip Al-based alloy coated steel sheet produced with an Al-9.2 mass% Si coating bath containing 0.03 mass% of boron, as measured by GDS analysis from the outermost surface into the depth of the coated layer as in FIG. 1. It can be seen that the boron is enriched in the vicinity of the outermost surface of the hot-dip Al-based alloy coated layer. The boron concentration remains essentially constant in regions with a sputter depth of about 1 µm or more, as in FIG. 1. The hot-dip Al-based alloy coated steel sheet has considerable improvements in coating galling resistance. Coating galling resistance can be evaluated by conducting, for example, a draw-bead test, as will be described later.

Detailed studies by the present inventors revealed that the galling resistance improving effect increases when the boron concentrates in the surface portion of the coated layer in a manner that makes the Iₘₐₓ/I₀ ratio 2.0 or more as measured by GDS analysis from the outermost surface into the depth of the hot-dip Al-based alloy coated layer, where Iₘₐₓ is the maximum detection intensity of boron in regions with a sputter depth of 0 (outermost surface) to 1.0 µm, and I₀ is the average detection intensity of boron within a sputter depth of 1.0 to 5.0 µm. An Iₘₐₓ/I₀ ratio 2.0 or more can be obtained with a hot-dip Al-based alloy coating composition containing boron in 0.002 mass% or more. A hot-dip Al-based alloy coated layer with an Iₘₐₓ/I₀ ratio 3.0 or more can be obtained with a hot-dip Al-based alloy coating composition containing boron in 0.010 mass% or more, and the galling resistance improving effect further increases with such a composition.

Presently, it remains unclear as to why boron enriches in the surface portion of the coated layer and improves the galling resistance when a hot-dip Al-based alloy coating bath contains a relatively large amount of boron (for example, 0.002 mass% or more). One possible explanation is that the boron that has lost solubility in the aluminum phase is forced to migrate to the surface portion during the solidification of the coated layer metal by the heat removal from substrate steel sheet. The boron enriched in the surface portion then forms compound particles harder than the coated layer material. It appears that such boron compound particles are dispersed in the surface portion of the coated layer, and contribute to lowering the sliding resistance against the mold. As can be seen from the GDS depth elemental profile, the structural change due to the addition of boron is confined to the surface portion of the coated layer. Accordingly, the corrosion resistance (red rust resistance) improving effect of the steel sheet by the hot-dip Al-based alloy coated layer, and the inherent workability of the Al coated layer remain the same as when boron is not added.

### Composition of Hot-Dip Al-Based Alloy Coated Layer

The hot-dip Al-based alloy coated layer has substantially the same chemical composition as the composition of the coating bath. The coated layer composition can thus be controlled by adjusting the coating bath composition.

Silicon serves to suppress the growth of the Al-Fe-based alloy layer formed between the substrate steel sheet and the coated layer when the hot-dip Al-based alloy coating is conducted. Because the Al-Fe-based alloy layer is brittle, workability suffers when the thickness of the Al-Fe-based alloy layer increases. The growth of the Al-Fe-based alloy layer can be suppressed more effectively when the silicon content in the Al-based alloy coating bath is 1.0 mass% or more, and this is advantageous is press working applications. Further, adding silicon to the Al-based alloy coating bath lowers the melting point of the coating bath, and is effective in lowering the coating temperature. It should be noted, however, that the silicon, when contained in excess, hardens the coated layer, and lowers bending workability. After various studies, the preferred Si content in the hot-dip Al-based alloy coated layer is found to be 12.0 mass% or less. With a Si content of less than 3.0 mass%, a less Si phase generates during the solidification of the coated layer, and the primary crystal Al phase softens. This is effective in applications where bending workability is important.

Boron is an addition element important for improving the galling resistance of the hot-dip Al-based alloy coated layer. In order for boron to enrich in the surface portion of the hot-dip Al-based alloy coated layer in amounts sufficient to improve the galling resistance, it is effective to contain boron in 0.002 mass% or more, more effectively 0.010 mass% or more in the coated layer. However, it has been found that boron, when added in excess, lowers the corrosion resistance (white rust resistance) of the coated layer. After various studies, the preferred boron content is found to be 0.080 mass% or less, more preferably 0.060 mass% or less.

The hot-dip Al-based alloy coating bath contains iron from sources such as the substrate steel sheet (coating substrate), and the constituting members of the hot-dip coating tank. The Fe content in the hot-dip Al-based alloy coated layer (excluding the Al-Fe-based alloy layer) is thus typically 0. 05 mass% or more. The upper limit of Fe content is 3.0 mass%. The Fe content is preferably 2.5 mass% or less.

Other elements such as Sr, Na, Ca, Sb, P, Mg, Cr, Mn, Ti, Zr, and V may be intentionally added to the hot-dip Al-based alloy coating bath, as required. Such other elements may come to be mixed in the hot-dip Al-based alloy coating bath from other sources, including raw materials. The hot-dip Al-based alloy coated steel sheet of interest in the present invention may also contain such commonly acceptable elements. Specifically, for example, the hot-dip Al-based alloy coated steel sheet may contain 0 to 0.2 mass% of Sr, 0 to 0.1 mass% of Na, 0 to 0.1 mass% of Ca, 0 to 0.6 mass% of Sb, 0 to 0.2 mass% of P, 0 to 5.0 mass% of Mg, 0 to 1.0 mass% of Cr, 0 to 2.0 mass% of Mn, 0 to 0.5 mass% of Ti, 0 to 0.5 mass% of Zr, and 0 to 0.5 mass% of V.

The reminder may be Al and unavoidable impurities.

### Al-Fe-Based Alloy Layer

In the production of the hot-dip Al-based alloy coated steel sheet, an Al-Fe-based alloy layer forms between the base steel of the substrate steel sheet and the coated layer. The alloy layer is of primarily Al-Fe-based intermetallic compounds. The alloy layer formed in a Si-containing Al-based alloy coating bath is abundant in silicon. As used herein, "Al-Fe-based alloy layer" refers to both a Si-free Al-Fe-based alloy layer, and a Si-containing so-called Al-Fe-Si-based alloy layer. Because the Al-Fe-based alloy layer is composed of brittle intermetallic compounds, the adhesion for the coated layer decreases as the layer thickness increases, and this interferes with press workability. After various studies, the preferred average thickness of the Al-Fe-based alloy layer is found to be 8. 0 µm or less, more preferably 6. 0 µm or less when press workability is important. In order to suppress the growth of the Al-Fe-based alloy layer when the hot-dip Al-based alloy coating is conducted, it is effective to add silicon to the Al-based alloy coating bath as above. The thickness of the formed alloy layer varies with the bath temperature and the dipping time in the coating bath. In a typical industrial continuous hot-dip coating line, it becomes easier to set conditions for controlling the average thickness of the Al-Fe alloy layer 8.0 µm or less when the Si content in the coating bath is 1.0 mass% or more. From the standpoint of press workability, the thickness of the Al-Fe-based alloy layer should be reduced as much as possible. However, it is not economical to overly reduce the thickness because it increases the process burden. Typically, the average thickness of the Al-Fe-based alloy layer may be 0.5 µm or more.

### Substrate Steel Sheet

The substrate steel sheet (coating substrate) may be selected from a variety of commonly used substrate steel sheets according to use. A stainless steel sheet may be used in applications where corrosion resistance is important. The thickness of the substrate steel sheet may be, for example, 0.4 to 2.0 mm.

### Examples

A hot-dip Al-based alloy coated steel plate (test material) was produced on a test line using a cold-rolled annealed steel sheet of the chemical composition shown in Table 1 having thickness of 0.8 mm. The composition of the coating bath was 0 to 12.0 mass% Si, and 0 to 0.12 mass% B, and contained Fe in 2.0 mass% taking into account possible incorporation of Fe in an industrial production line. The balance was Al and unavoidable impurities. The B content was adjusted by adding a predetermined amount of Al-4 mass% B master alloy. The temperature of the coating bath was 650 to 680°C, the dipping time in the coating bath was 2 seconds, and the cooling rate was 13°C/sec. The Si and B contents of each example are as shown in Table 2. The amount of coating per side (a half of the difference between the average thickness of steel sheet after coating and the thickness of the coating substrate) was about 20 µm.

[Table 1]

**Table 1**

| Chemical composition of substrate steel sheet (mass%) | | | | | | | |
|---|---|---|---|---|---|---|---|
| C | Si | Mn | P | S | Al | O | N |
| 0.033 | <0.01 | 0.23 | <0.01 | 0.013 | 0.01 | 0.0027 | 0.0025 |

The coated steel sheet obtained was tested as follows.

### GDS Depth Elemental Analysis

The hot-dip Al-based alloy coated steel sheet sample was subjected to a preliminary sputtering test for a predetermined time period by sputtering into the depth of the coated layer from the outermost surface under certain conditions, using a glow discharge optical emission spectrometer (SPECTRUMA ANALYTIK GmbH; GDA750). The tested sample was then measured for surface unevenness profile to determine the sputter depth. From the preliminary test, a sputtering rate of 0.073 µm/sec was set for these GDS sputtering conditions. Each test material was analyzed by GDS from the outermost surface into the depth of the hot-dip Al-based alloy coated layer under these GDS sputtering conditions. The Iₘₐₓ/I₀ ratio was then determined from the depth elemental concentration profiles shown in FIGS. 1 and 2, where I_{MAX} is the maximum detection intensity of boron in regions with a sputter depth of 0 to 1.0 µm, and I₀ is the average detection intensity of boron within a sputter depth of 1.0 to 5.0 µm.

### Average Thickness of Al-Fe-Based Alloy Layer

The cross section parallel to the thickness direction of the test material was observed by SEM, and the average thickness of the Al-Fe-based alloy layer interposed between the base steel of the substrate steel sheet and the hot-dip Al-based alloy coated layer was determined. Each test material was measured over a distance of 200 µm or more in a direction perpendicular to the thickness direction.

### Bending Workability

A bending test piece, measuring 10 mm in width with respect to the lengthwise direction perpendicular to the rolling direction was collected from the test material, and subjected to a 2t bend test (t is the thickness of steel sheet) with a bend angle of 180° according to the V block method of JIS Z2248:2006. Here, the bend axis lies in the same direction as the rolling direction. The coated layer surface on the outer side of the bent portion was observed after the test, and the number of cracks on the coated layer surface observed over the whole 10 mm width of the test piece was examined. Evaluation was made according to the following criteria, and the sample was deemed as passing the test when it scored ○ or better.
⊚: No cracks
○: 1 to 2 cracks
Δ: 3 to 6 cracks
×: 7 or more cracks

### Draw-Bead Test

FIG. 3 schematically represents the positional relationship between the molds and the test material (coated steel plate) used in a draw-bead test. Each test material was subj ected to the draw-bead test under the following conditions.
Contact mold: SKD 11
Male mold: Bead height = 4 mm, bead tip R = 0.5 mm
Female mold: Shoulder R = 2 mm
Draw rate: 100 mm/min
Pressing load: 1 kN
Test piece width: 30 mm
The mold surface was polished with a sandpaper (grain size: P1000 (JIS R6010)), and washed with acetone for each measurement.

The draw force applied in the test was measured with a load cell, and the maximum value of the measured draw force was used as the draw force (kN) of the test material. The coated layer surface was observed for the presence of any galling after the test. Coating galling resistance was evaluated according to the following criteria, and the sample was deemed as passing the test when it scored ○.
○ : No galling
Δ : Slight galling was observed in the surface above the base steel of the substrate steel sheet
× : Galling was observed in the base steel of the substrate steel sheet

### Press Workability

Each test material was cupped under the following conditions.
Drawing ratio: 2.0
Blank diameter: 80 mm
Dice: Diameter = 42 mm, R = 5 mm
Punch: Diameter = 40 mm, R = 5 mm

The coated layer on the outer side of the vertical wall portion of the processed cup was observed for the state of peeling off, and the press workability was evaluated according to the following criteria. The sample was deemed as passing the test when it scored ○.
○: No peeling off in the coated layer
×: Peeling off was observed in the coated layer

### Corrosion Resistance of Coated Layer

The hot-dip Al-based alloy coated layer of each test material was subjected to a neutral salt spray test (SST test) according to the method of JIS Z2371:2000 without any further treatment, and was measured for percentage area of white rusting. The corrosion resistance of the coated layer was evaluated according to the following criteria, and the sample was deemed as passing the test when it scored ○:
○: Percentage area of white rusting is 0% or more and less than 20%
Δ: Percentage area of white rusting is 20% or more and less than 50%
×: Percentage area of white rusting is 50% or more

The results are presented in Table 2.

[Table 2]

**Table 2**

| Division | No. | Hot-dip Al-based alloy coated layer | | | average thickness of Al-Fe-bas ed alloy layer (µm) | Bending workability | Draw-bead test | | Press workability | Corrosion resistance of coated layer |
|---|---|---|---|---|---|---|---|---|---|---|
| | | Si, B contents (mass%) | | B distribution I_{MAX}/I₀ | | | Galling resistance | Draw force (kN) | | |
| | | Si | B | | | | | | | |
| Examples of Invention | 1 | 1.0 | 0.03 | 6.5 | 7.3 | ⊚ | ○ | 3.1 | ○ | ○ |
| | 2 | 12.0 | 0.03 | 6.5 | 2.0 | ○ | ○ | 2.5 | ○ | ○ |
| | 3 | 9.2 | 0.002 | 2.0 | 2.7 | ○ | ○ | 2.8 | ○ | ○ |
| | 4 | 9.5 | 0.015 | 4.0 | 2.5 | ○ | ○ | 2.9 | ○ | ○ |
| | 5 | 9.0 | 0.022 | 4.1 | 3.0 | ○ | ○ | 2.9 | ○ | ○ |
| | 6 | 8.9 | 0.03 | 6.0 | 3.1 | ○ | ○ | 2.9 | ○ | ○ |
| | 7 | 9.1 | 0.05 | 6.5 | 3.0 | ○ | ○ | 3.0 | ○ | ○ |
| | 8 | 9.0 | 0.08 | 6.7 | 3.1 | ○ | ○ | 3.0 | ○ | ○ |
| | 9 | 2.8 | 0.02 | 4.0 | 4.5 | ⊚ | ○ | 3.0 | ○ | ○ |
| | 10 | 2.5 | 0.02 | 4.2 | 4.9 | ⊚ | ○ | 3.0 | ○ | ○ |
| | 11 | 1.5 | 0.02 | 4.3 | 6.8 | ⊚ | ○ | 3.1 | ○ | ○ |
| | 12 | 1.0 | 0.02 | 6.6 | 7.2 | ⊚ | ○ | 3.2 | ○ | ○ |
| Comparative Examples | 21 | 0 | 0 | - | 10.0 | ⊚ | × | 4.8 | × | ○ |
| | 22 | 1.0 | 0 | - | 7.3 | ⊚ | × | 4.3 | ○ | ○ |
| | 23 | 12.0 | 0 | - | 2.0 | ○ | × | 4.0 | ○ | ○ |
| | 24 | 9.2 | 0.001 | 1.8 | 2.9 | ○ | × | 4.0 | ○ | ○ |
| | 25 | 9.0 | 0.10 | 6.8 | 3.0 | ○ | ○ | 2.8 | ○ | × |
| | 26 | 0 | 0.12 | 6.8 | 10.0 | ⊚ | × | 3.0 | × | × |
| | 27 | 0.5 | 0.08 | 6.7 | 8.6 | ⊚ | ○ | 3.3 | × | ○ |
| | 28 | 14.0 | 0.025 | 4.1 | 2.0 | × | ○ | 3.0 | ○ | ○ |

The samples of Examples of the present invention in which the boron enriched in the surface portion of the coated layer, and that had a high B detection intensity ratio I_{MAX}/I₀ involved low draw forces in the draw-bead test, and the coating galling resistance was desirable. The bending workability, the press workability, and the corrosion resistance of the coated layer were also desirably maintained. The bending workability was particularly desirable in samples that contained 1.0 mass% or more and less than 3.0 mass% of silicon in the Al-based alloy coated layer.

On the other hand, the galling resistance was poor in Comparative Examples Nos. 21 to 23 in which hot-dip Al-based alloy coating was performed without adding boron. In sample No. 24, the B content in the coated layer was insufficient, and the boron concentration in the surface portion of the coated layer was small, failing to show the coating galling resistance improving effect. The corrosion resistance was poor in sample Nos. 25 and 26 because of the excessively high B contents in the coated layer. In sample Nos. 21, 26, and 27, the Si content in the coated layer was insufficient, and the thickness of the Al-Fe-based alloy layer increased. The press formability was poor accordingly. In sample No. 26, the coated layer peeled off as a result of the broken Al-Fe-based alloy layer in the draw-bead test. In sample No. 28, the coated layer hardened because of the excessively high Si content in the coated layer, and the bending workability was poor.

## Claims

1. A hot-dip Al-based alloy coated steel sheet excellent in workability that comprises a hot-dip Al-based alloy coated layer of a composition containing 1.0 to 12.0 mass% of silicon and 0.002 to 0.080 mass% of boron and formed on a surface of a substrate steel sheet, the coated layer having an I_{MAX}/I₀ ratio of 2.0 or more as measured by GDS (glow discharge optical emission spectrometry) depth analysis from the outermost surface into the depth of the coated layer, where I_{MAX} is the maximum detection intensity of boron in regions with a sputter depth of 0 to 1.0 µm, and I₀ is the average detection intensity of boron within a sputter depth of 1.0 to 5.0 µm.

2. The hot-dip Al-based alloy coated steel sheet according to claim 1, wherein the composition of the hot-dip Al-based alloy coated layer comprises 1.0 to 12.0 mass% of silicon, 0.002 to 0.080 mass% of boron, 0.05 to 3.0 mass% of iron, 0 to 0.2 mass% of strontium, 0 to 0.1 mass% of sodium, 0 to 0.1 mass% of calcium, 0 to 0.6 mass% of antimony, 0 to 0.2 mass% of phosphorus, 0 to 5.0 mass% of magnesium, 0 to 1.0 mass% of chromium, 0 to 2.0 mass% of manganese, 0 to 0.5 mass% of titanium, 0 to 0.5 mass% of zirconium, 0 to 0.5 mass% of vanadium, with a balance of Al and unavoidable impurities.

3. A hot-dip Al-based alloy coated steel sheet excellent in workability that comprises a hot-dip Al-based alloy coated layer of a composition containing 1.0 mass% or more to less than 3.0 mass% of silicon and 0.002 to 0.080 mass% of boron and formed on a surface of a substrate steel sheet, the coated layer having an I_{MAX}/I₀ ratio of 2.0 or more as measured by GDS (glow discharge optical emission spectrometry) depth analysis from the outermost surface into the depth of the coated layer, where I_{MAX} is the maximum detection intensity of boron in regions with a sputter depth of 0 to 1.0 µm, and I₀ is the average detection intensity of boron within a sputter depth of 1.0 to 5.0 µm.

4. The hot-dip Al-based alloy coated steel sheet according to claim 3, wherein the composition of the hot-dip Al-based alloy coated layer comprises 1.0 mass% or more to less than 3.0 mass% of silicon, 0.002 to 0.080 mass% of boron, 0.05 to 3.0 mass% of iron, 0 to 0.2 mass% of strontium, 0 to 0.1 mass% of sodium, 0 to 0.1 mass% of calcium, 0 to 0.6 mass% of antimony, 0 to 0.2 mass% of phosphorus, 0 to 5.0 mass% of magnesium, 0 to 1.0 mass% of chromium, 0 to 2.0 mass% of manganese, 0 to 0.5 mass% of titanium, 0 to 0.5 mass% of zirconium, 0 to 0.5 mass% of vanadium, with a balance of Al and unavoidable impurities.

5. The hot-dip Al-based alloy coated steel sheet according to any one of claims 1 to 4, wherein the average thickness of an Al-Fe-based alloy layer interposed between the base steel of the substrate steel sheet and the hot-dip Al-based alloy coated layer is 8.0 µm or less.

6. The hot-dip Al-based alloy coated steel sheet according to any one of claims 1 to 5, wherein the hot-dip Al-based alloy coated steel sheet is for use in a process that includes sliding the coated layer against a mold.
